Europäisches Patentamt

European Patent Office

Office européen des brevets

(11) Numéro de publication: **0 101 669**
A2

## (12) DEMANDE DE BREVET EUROPEEN

(21) Numéro de dépôt: 83810364.6

(22) Date de dépôt: 16.08.83

(51) Int. Cl.³: **G 01 L 9/08, G 01 L 1/16,**
**G 01 N 27/00, G 01 D 3/04**

(30) Priorité: 19.08.82 FR 8214444

(71) Demandeur: **ASULAB S.A., Faubourg du Lac 6,**
**CH-2502 Bienne (CH)**

(43) Date de publication de la demande: **29.02.84**
**Bulletin 84/9**

(72) Inventeur: **Dinger, Rudolf, Charrières 7,**
**CH-2024 St.-Aubin (CH)**

(74) Mandataire: **Barbeaux, Bernard et al, c/o ASUAG -**
**Société Générale de l'Horlogerie Suisse**
**S.A. 6, Faubourg du Lac, CH-2501 Bienne (CH)**

(84) Etats contractants désignés: **CH DE GB LI**

(54) Capteur de mesure muni d'un résonateur piézo-électrique compensé en température.

(57) L'invention concerne un capteur de mesure de la pression d'un gaz, d'une force etc..., qui comporte un résonateur piézo-électrique comme élément sensible, la mesure étant indépendante de la température.

Le capteur comprend un résonateur piézo-électrique (30) soumis à la grandeur à mesurer (GP), un deuxième résonateur (34) de compensation, et un circuit (G) de traitement des signaux ($f_1$) et ($f_2$) délivrés par les résonateurs. Les résonateurs (30) et (34) présentent les mêmes caractéristiques thermiques et sont soumis à la même température grâce à quoi le circuit (G) délivre un signal ($f'$) de mesure de la grandeur physique (GP) indépendant de la température (T).

EP 0 101 669 A2

0101669

ESA 127 EP

GD/ek/BB/g

## CAPTEUR DE MESURE MUNI D'UN RESONATEUR PIEZO-ELECTRIQUE

## COMPENSE EN TEMPERATURE

La présente invention concerne un capteur de mesure muni d'un résonateur piézo-électrique compensé en température.

De façon plus précise l'invention concerne un capteur de mesure dans lequel l'élément sensible à la grandeur physique à mesurer est essentiellement constitué par un résonateur piézo-électrique dont la fréquence de résonance dépend de ladite grandeur, le capteur comprenant en outre des moyens pour compenser les effets parasites de l'action de la température sur le résonateur. Bien entendu la grandeur physique à mesurer n'est pas la température.

Il est bien connu que la fréquence de résonance d'un résonateur piézo-électrique varie en fonction d'un certain nombre de grandeurs physiques auxquelles il est soumis. On peut citer la température, la pression du gaz dans lequel vibre le résonateur ou des contraintes mécaniques auxquelles le résonateur peut être soumis. Parmi ces grandeurs physiques, la température représente un cas particulier. En effet il est toujours possible de faire travailler un résonateur dans des conditions telles qu'aucune pression ou aucune contrainte ne lui soit appliquée. Il suffit, par exemple, de monter le résonateur dans un boîtier étanche dans lequel on a réalisé un vide poussé. En revanche, il est beaucoup plus difficile de s'affranchir de l'effet de température. Or, l'effet de température n'est pas négligeable en général.

Par ailleurs il est très intéressant de réaliser des capteurs à partir d'un résonateur piézo-électrique en exploitant la variation de la fréquence de résonance du résonateur sous l'effet de la grandeur physique qu'on veut mesurer. En effet, l'information représentative de l'intensité de la grandeur physique est la fréquence d'un signal périodique. C'est-à-dire qu'il s'agit d'une information qui est délivrée sous une forme quasi-numérique. On évite ainsi l'emploi de convertisseurs analogiques-numériques qui sont nécessaires lorsque l'élément sensible du capteur délivre un courant ou une tension, c'est-à-dire un signal analogique.

Lorsqu'on veut réaliser un capteur de température avec un résonateur piézo-électrique, il est souvent relativement simple, comme déjà expliqué, d'isoler cette grandeur pour que la variation de la fréquence de résonance ne dépende que de la température. Les problèmes à résoudre concernent plutôt la non-linéarité de la variation de fréquence et l'obtention d'une bonne sensibilité.

En revanche, si l'on veut réaliser un capteur sensible à une autre grandeur physique, par exemple la pression d'un gaz ou une force, le problème de l'influence de la température, en tant que phénomène parasite, se pose.

Une première solution consiste à utiliser comme élément sensible un résonateur à quartz présentant une forme ou une coupe particulière afin que la dépendance de la fréquence de résonance vis-à-vis de la grandeur à mesurer soit importante et que l'effet de la température puisse être négligé en première approximation. Cela signifie que le coefficient linéaire de dépendance de la fréquence vis-à-vis de la température est nul et que la relation entre la variation relative de fréquence et la température est sensiblement parabolique, le sommet de la parabole correspondant à une température dite "d'inversion". La variation relative de fréquence est donc une fonction sensiblement quadratique de l'écart entre la température d'inversion et la température de travail. Si l'on s'écarte de façon sensible de la température d'inversion, la variation de fréquence due à la seule température devient non négligeable et a, de toutes manières, un effet néfaste sur la précision de la mesure. Par exemple, pour un diapason en quartz de coupe sensiblement Z (Z axe optique du quartz) excité en flexion, le coefficient du deuxième ordre est de l'ordre de $35.10^{-9}/°C^2$. Pour un écart de 15°C avec la température d'inversion, la variation relative de fréquence vaut $8.10^{-6}$.

Une autre solution consiste à associer à l'élément sensible un capteur absolu de température et un circuit de calcul, qui, à partir de l'indication de température, calcule la variation de fréquence due à la température et compense l'effet de la température. Cette solution présente bien sûr l'inconvénient majeur de rendre le circuit électronique beaucoup plus complexe et nécessite un capteur de température.

Pour remédier à ces inconvénients, l'objet principal de l'invention est de fournir un capteur de mesure de pression d'un gaz, de force, etc. qui utilise comme élément sensible un résonateur piézo-électrique de type classique, par exemple un diapason ou un double diapason, et qui soit compensé en température, sans faire appel ni à un capteur absolu de température ni à un circuit électronique complexe.

Pour atteindre ce but, l'invention consiste à associer, dans le capteur de mesure, au résonateur piézo-électrique formant l'élément

sensible un deuxième résonateur piézo-électrique, dit de référence, qui présente les mêmes caractéristiques thermiques que l'élément sensible et qui est monté de telle manière que les deux résonateurs soient portés à la même température, mais que le résonateur de référence ne soit pas soumis à la grandeur physique à mesurer. Comme le comportement thermique des résonateurs dépend essentiellement de l'orientation cristalline (angle de coupe) et du mode de vibration (flexion, cisaillement, allongement, ...), il est relativement facile de trouver un type de résonateur ayant le même comportement thermique que le résonateur sensible à la grandeur physique. Le capteur de mesure comprend également des moyens pour élaborer un signal représentatif de la différence entre les fréquences délivrées par les deux résonateurs, signal qui est représentatif de la grandeur physique à mesurer indépendamment de la température.

Selon un premier mode de mise en oeuvre, le capteur sert à mesurer la pression d'un gaz contenu dans une enceinte. Le premier résonateur est un diapason ayant un mode principal d'excitation en flexion, qui est placé dans un boîtier percé d'un orifice pour laisser pénétrer le gaz dont on veut mesurer la pression. Le résonateur de référence est un diapason sensiblement identique au premier et placé dans un boîtier étanche où règne un vide poussé.

Les deux boîtiers sont reliés entre eux par un support formant pont thermique.

Selon un deuxième mode de mise en oeuvre, le capteur mesure une force. Le premier résonateur consiste en un double diapason, qui sera explicité ultérieurement, comportant deux bases. A ce premier résonateur, formant l'élément sensible, sont associés des moyens pour appliquer la force à mesurer au résonateur selon la direction des bras du double diapason. Le deuxième résonateur est constitué par un double diapason ou un diapason simple présentant des caractéristiques thermiques sensiblement identiques à celles du double diapason. Le capteur comprend en outre des moyens pour établir un pont thermique entre les deux résonateurs. De préférence les deux résonateurs sont identiques et montés pour être soumis à des pressions ambiantes semblables.

Selon un troisième mode de mise en oeuvre, le capteur mesure la teneur d'un gaz dans un mélange de gaz ou encore d'aerosols ou de particules en suspension dans un gaz. L'élément sensible est constitué par un résonateur, de préférence un diapason excité en flexion, muni au moins partiellement sur ses faces d'un revêtement apte à absorber de façon reversible ledit gaz, ledit aerosol ou lesdites particules, ledit résonateur étant monté pour être plongé dans ledit milieu gazeux. Le résonateur de référence est de préférence un deuxième diapason présentant les mêmes caractéristiques thermiques que le premier résonateur et monté pour ne pas être influencé par la nature du milieu gazeux. Le capteur de mesure comprend en outre des moyens pour réaliser un pont thermique entre les deux résonateurs. De préférence les deux résonateurs sont placés dans la même ambiance gazeuse, le résonateur de référence étant dépourvu de revêtement absorbant.

On comprend aisément que, dans tous les cas, l'élément sensible est soumis à la grandeur physique à mesurer et a des grandeurs parasites parmi lesquelles figure au moins la température. En revanche, le résonateur de référence est soumis aux grandeurs parasites dont au moins la température. Du fait que les caractéristiques thermiques des deux résonateurs sont aussi semblables que possible et qu'ils sont soumis à la même température, on peut, bien qu'il n'y ait pas de capteur de température, combiner les signaux délivrés par les deux résonateurs pour obtenir un signal représentatif de la seule intensité de la grandeur physique à mesurer, et non de la température, notamment en utilisant la différence de fréquence des deux résonateurs.

D'autres caractéristiques et avantages de l'invention apparaîtront plus clairement à la lecture de la description qui suit de plusieurs modes de mise en oeuvre de l'invention donnés à titre d'exemples non limitatifs. La description se réfère au dessin annexé sur lequel:

- la figure 1 est une vue schématique d'un capteur de mesure selon l'invention;

- la figure 2a illustre le principe de compensation thermique selon l'invention;

- la figure 2b est un ensemble de courbes qui expliquent la compensation thermique selon l'invention;

- la figure 3a est une vue en perspective d'un diapason en quartz formant l'élément sensible pour un capteur de mesure de la pression d'un gaz;

- la figure 3b représente une coupe verticale des bras du résonateur de la figure 3a pour montrer la disposition des électrodes;

- la figure 4 est une vue d'ensemble d'un capteur pour la mesure de la pression d'un gaz, utilisant l'élément sensible de la figure 1;

- la figure 5 représente plus en détails un mode de réalisation du circuit de traitement de la figure 1;

- la figure 6 illustre une variante de réalisation de l'élément sensible pour le capteur de mesure de la figure 4;

- la figure 7a montre en perspective un résonateur en forme de double diapason pour former l'élément sensible d'un capteur de mesure de force;

- la figure 7b représente l'élément sensible de la figure 7a en vue de dessus pour montrer la disposition des électrodes;

- la figure 8 illustre un diapason utilisé pour la mesure du taux d'un gaz dans un mélange gazeux.

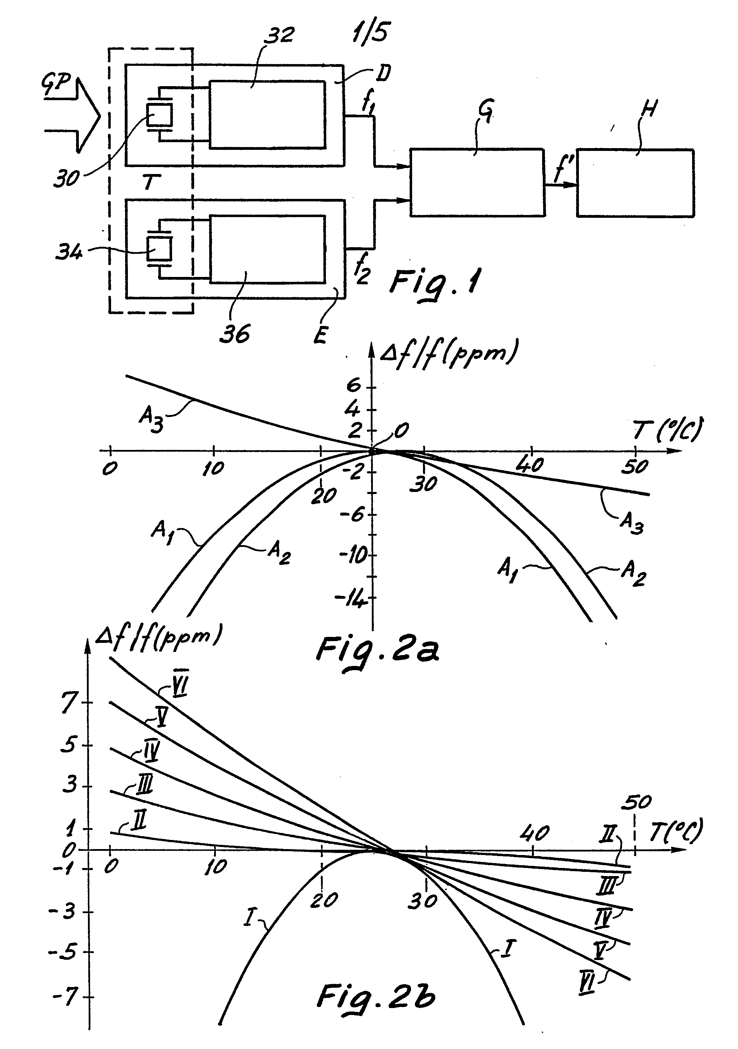

La figure 1 montre de façon simplifiée un capteur de mesure compensé en température selon l'invention. Il comprend un premier oscillateur D de mesure constitué essentiellement par un résonateur piézo-électrique 30 associé à un circuit d'entretien 32. Le résonateur 30 forme l'élément sensible à la grandeur physique GP que l'on veut mesurer, c'est-à-dire que l'oscillateur D délivre un signal dont la fréquence $f_1$ dépend de la valeur de la grandeur physique GP. Le capteur comprend également un deuxième oscillateur E de compensation constitué essentiellement par un résonateur piézo-électrique 34 associé à un circuit d'entretien 36. Le résonateur 34 est monté de telle manière que la fréquence $f_2$ du signal qu'il délivre ne dépende pas de la grandeur physique GP à mesurer. Le circuit de traitement G reçoit sur ses entrés les signaux de fréquences $f_1$ et $f_2$ qui sont traités pour délivrer un signal f' représentatif de l'intensité de la grandeur physique GP, mais sensiblement indépendant de la température. Ce signal f' sert à commander un circuit d'affichage H qui affiche, par exemple sous forme numérique, la valeur mesurée de la grandeur physique GP.

Les deux résonateurs 30 et 34 sont montés de telle manière qu'ils soient portés sensiblement à une même température T. En d'autres termes, les résonateurs 30 et 34 sont réunis par des moyens qui forment un pont thermique entre eux. Ces moyens peuvent prendre des formes différentes selon le type de capteur de mesure considéré. Par ailleurs, selon l'invention, les deux résonateurs 30 et 34 présentent des caractéristiques thermiques aussi proches que possible.

Comme cela a déjà été expliqué, la fréquence de résonance d'un résonateur piézo-électrique est une fonction de la température à laquelle il est soumis. Dans le cas particulier, mais très fréquent, où le résonateur est en quartz, la relation entre la fréquence de résonance et la température est sensiblement quadratique, de la forme:

$$f = f_o [1 + \beta (T - T_i)^2]$$

dans laquelle $T_i$ est la température d'inversion et $f_o$ la fréquence de résonance à la température d'inversion, $\beta$ étant le coefficient qui donne la relation entre la variation de température et la variation relative de la fréquence $\frac{\Delta f}{f}$ .

La courbe I de la figure 2b donne un exemple d'une telle relation sous la forme:

$$\frac{\Delta f}{f} = \beta (T - T_i)^2.$$

La fréquence $f_1$ délivrée par le résonateur de mesure diffère donc de sa fréquence de résonance $(f_o)_1$ par un terme qui est dû à l'écart de température par rapport à $(T_i)_1$ et d'un terme qui dépend de la grandeur physique à mesurer GP, cette grandeur n'étant pas, bien sûr, la température. La fréquence $f_2$ délivrée par le résonateur de compensation diffère de sa fréquence de résonance $(f_o)_2$ par un terme qui est dû à l'écart de température par rapport à $(T_i)_2$.

Si les températures d'inversion sont les mêmes $[(T_i)_1 = (T_i)_2]$ et si les coefficients thermiques $\beta_1$ et $\beta_2$ sont identiques, en traitant les signaux délivrés par les deux résonateurs, on obtient un signal qui ne dépend pas de la température, mais qui dépend de la grandeur physique à mesurer.

La figure 2a illustre le principe de compensation de la fréquence d'un résonateur par un autre résonateur. Les courbes $A_1$, $A_2$, $A_3$ de cette figure donnent des variations relatives de fréquence $\frac{\Delta f}{f}$ en fonction de la température.

La courbe $A_2$ représente la variation relative de fréquence d'un résonateur (par exemple 30) sans compensation et la courbe $A_1$ les variations relatives de la fréquence du résonateur de compensation (par exemple 34). La compensation thermique selon l'invention donne la courbe $A_3$ qui est obtenue en faisant la différence des ordonnées des paraboles $A_2$ et $A_1$ pour chaque température. La courbe $A_2$ montre que, sans compensation thermique, la variation relative de fréquence dans la plage 0°C à 50°C peut valoir $\pm$ 22 ppm. En revanche avec la compensation thermique (courbe $A_1$) cette variation relative vaut au plus $\pm$ 5 ppm, bien que l'écart entre les deux températures d'inversion soit de 3°C. En diminuant cet écart de températures d'inversion on améliore encore la compensation.

Bien entendu, la compensation n'est strictement rigoureuse que si les caractéristiques thermiques des deux résonateurs sont identiques (même coefficient $\beta$, même température d'inversion). Les courbes II à VI de la figure 2b montrent la dépendance vis-à-vis de la température d'un capteur de mesure selon l'invention dans lequel les caractéristiques thermiques du résonateur de compensation ne sont pas identiques à celles du résonateur de mesure. Pour la courbe I on a $\beta_1 = - 37,4 \times 10^{-9}/°C^2$ et $(T_i)_1 = 25°C$.

Pour les courbes II à VI on a $\beta_2 = -38,7°C$. Les valeurs respectives de $(T_i)_2$ sont 25°C, 26°C, 27°C, 28°C et 29°C. Il apparaît ainsi que, même si les caractéristiques thermiques ne sont pas identiques, mais seulement relativement proches, par exemple celles de la courbe III, l'effet dû à la seule température reste faible (inférieur à 3 ppm) pour une gamme de température allant de 0°C à 50°C.

Or, les tests faits sur des séries de résonateurs en forme de diapasons réalisés par attaque chimique montrent que la dispersion des caractéristiques thermiques est bien inférieure aux écarts correspondant à la courbe III. Il est donc très possible, selon l'invention, d'assurer une bonne compensation thermique dans une gamme de température importante, sans avoir pour cela un circuit de compensation compliqué.

On va maintenant décrire plusieurs capteurs de mesure utilisant les moyens de compensation qui viennent d'être expliqués.

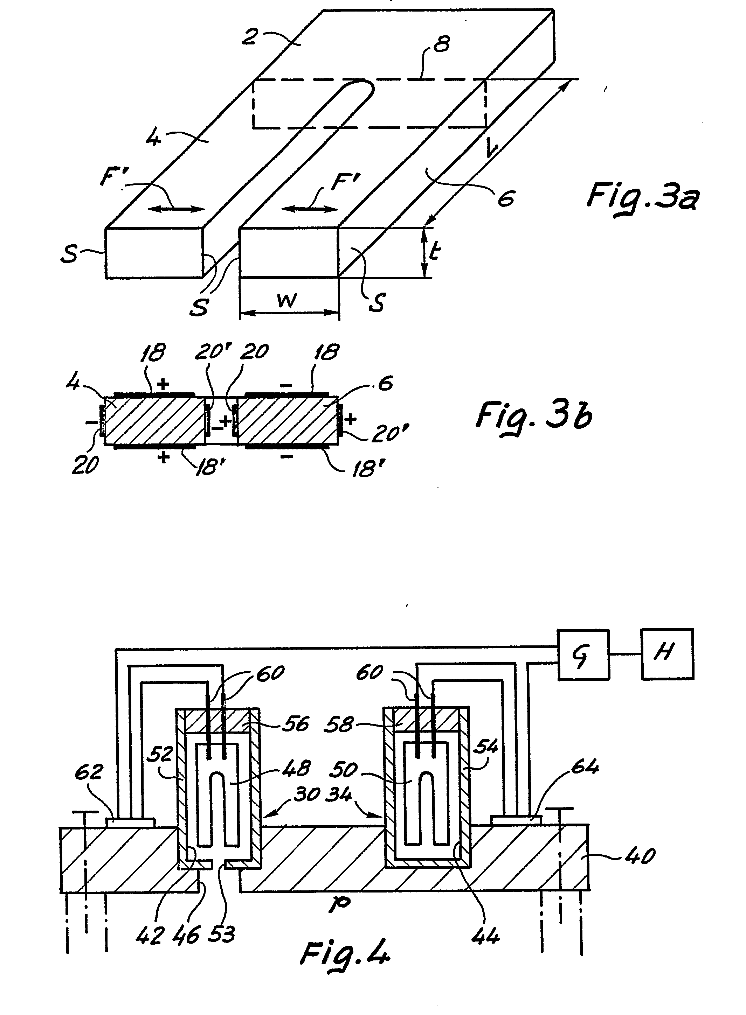

Les figures 3 à 6 concernent un capteur pour la mesure de la pression d'un gaz. Sur la figure 3a on a représenté un diapason à quartz de type classique. Le diapason comprend une base 2 et deux bras respectivement référencés 4 et 6. Les bras 4 et 6 sont rattachés à la base 2 au niveau d'un plan 8 représenté en traitillés. Chaque bras a une longueur L, une largeur w et une épaisseur t et présente des faces latérales désignées par S. Dans le cas où un tel diapason est excité en flexion, c'est-à-dire dans le cas où ses bras vibrent comme cela est illustré par les flèches F' la variation de fréquence propre $\Delta f$ du résonateur en fonction de la pression p est donnée par la formule suivante :

$$\frac{\Delta f}{f} = k_1 \times \frac{p}{\bar{v}} \times \frac{S}{m} \times \frac{1}{\omega}$$

Dans cette formule f représente la fréquence de vibration du diapason, $\bar{v}$ la vitesse d'agitation thermique moyenne des molécules du gaz entourant le diapason, gaz qui est à la pression p, s représente la surface de chacun des flancs S des bras du diapason, c'est-à-dire la surface qui est perpendiculaire à la vitesse de déplacement, m représente la masse en mouvement du diapason, c'est-à-dire la masse des bras limitée par leur contour extérieur et par le plan 8, $\omega$ est la pulsation à la résonance et vaut donc $2\pi f$, et $k_1$ est une constante.

Compte tenu de la définition donnée précédemment pour s et m, ces deux grandeurs peuvent s'exprimer de la manière suivante :

$$S = L \times t \text{ et } m = \rho \times L \times t \times w,$$

$\rho$ étant la densité du quartz.

Si l'on reporte ces valeurs de s et m dans la formule précédente, on obtient l'expression suivante :

$$\frac{\Delta f}{f} = k_2 \times \frac{p}{\bar{v}} \times \frac{1}{w} \times \frac{1}{\omega} \quad , \; k_2 \text{ étant une constante.}$$

On voit, dans cette formule, que la variation relative de fréquence en fonction de la pression dépend, quant aux grandeurs dimensionnelles, uniquement de l'inverse de la largeur w du bras. Il faut cependant ajouter que, comme cela est bien connu, la pulsation $\omega$ dépend de la longuer L et de la largeur w du bras.

Pour augmenter la sensibilité à la pression du diapason il faudrait donc diminuer la largeur w des bras du diapason pour diminuer la pulsation ω. Cependant une telle solution (bras du diapason étroits) entraîne une capacité dynamique du diapason très faible ce qui rend une telle conception inutilisable.

La figure 3b montre un exemple de réalisation des électrodes pour exciter le diapason de la figure 3a en flexion. Chaque bras 4, respectivement 6, comporte deux électrodes 18 et 18' disposées respectivement sur la face supérieure et sur la face inférieure du bras et des électrodes latérales 20 et 20' disposées respectivement sur les deux flancs de chaque bras. Les électrodes opposées sont portées au même potentiel comme cela est indiqué sur la figure 3b.

Si l'on considère un tel diapason de type horloger avec $L = 2400\mu m$, $w = 220\mu m$ et $t = 125\mu m$, le coefficient barométrique vaut 250 ppm/bar et la fréquence de résonance est égale à 32.768 Hz. Il est clair qu'une telle sensibilité à la pression serait insuffisante pour pouvoir utiliser ce diapason comme capteur de pression, compte-tenu de son coefficient $\beta$ (environ $- 35.10^{-9}/°C^2$). En effet, pour un écart de 25°C par rapport à la température d'inversion $T_i$, l'écart relatif de fréquence serait d'environ 22 ppm, c'est un écart correspondant à environ 100 mbars.

Au contraire, avec le même diapason de mesure compensé par un autre diapason sensiblement identique, conformément à l'invention, l'erreur due à l'effet de température sera au maximum de 10 mbars.

La figure 4 représente l'ensemble d'un capteur de mesure utilisant comme élément sensible et comme élément de compensation des diapasons tels que celui des figures 3.

Le capteur comprend une bride métallique 40 destinée à être fixée sur l'enceinte où on veut mesurer la pression du gaz. La bride 40 comporte sur sa face externe deux logements 42 et 44, le logement 42 étant prolongé par un orifice 46 débouchant dans la face interne de la bride. Chaque résonateur 30, 34 est constitué par un diapason en quartz 48, 50 du type décrit précédemment. De façon classique chaque diapason est logé dans un boîtier cylindrique 52, 54 fermé par une embase 56, 58. Chaque embase est traversée par deux barettes conductrices 60 qui servent à l'alimentation électrique des électrodes, et à la fixation du diapason par sa base. Le boîtier 52 du résonateur de mesure est percé d'un orifice 53 débouchant dans l'orifice 46 de la bride 40. Ainsi l'intérieur du boîtier 52 est à la pression p qui règne dans l'enceinte. Au contraire le boîtier 54 du résonateur de compensation est étanche et mis sous vide. Comme le montre la figure 4, les boîtiers sont montés dans les logements 42 et 44. Dans le cas du boîtier 52 il doit être scellé de façon étanche dans son logement pour ne pas rompre l'étanchéité de l'enceinte.

Le résonateur 30 est associé au circuit intégré 62 formant son circuit d'entretien 32 (voir fig. 1) et le résonateur 34 à un circuit intégré 64 formant son circuit d'entretien 36.

Il apparaît ainsi que le diapason 48 est soumis à la pression à mesurer, tandis que le diapason 50 de compensation est sous vide. En revanche, la bride métallique 40 forme un pont thermique entre les boîtiers 52 et 54 et donc entre les deux diapasons. Ces deux diapasons sont donc à la même température.

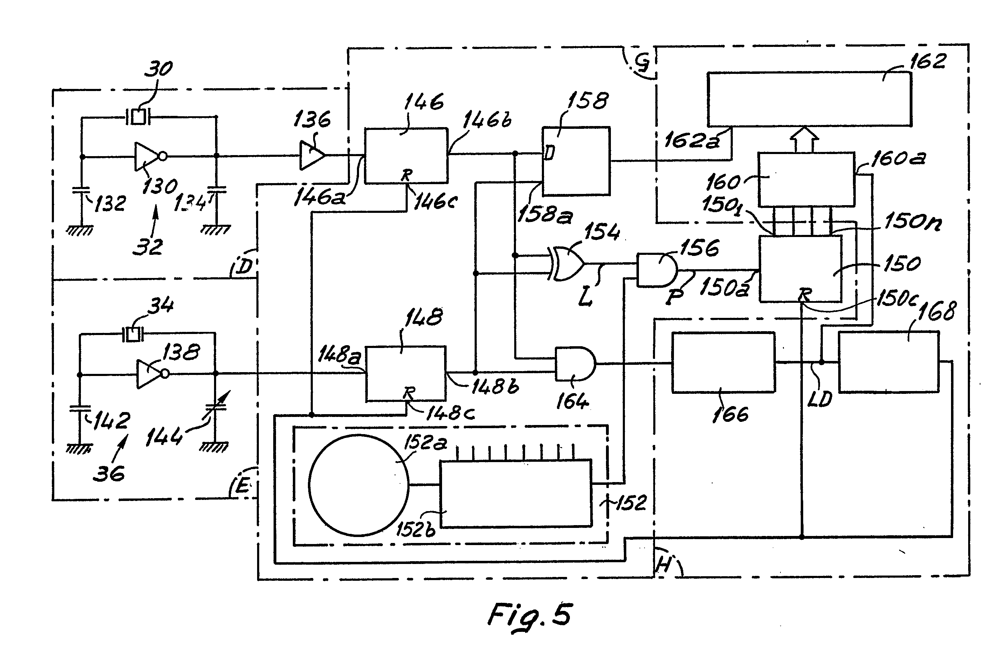

La figure 5 montre plus en détails un mode possible de traitement des signaux délivrés par les deux résonateurs afin d'éliminer l'effet de température.

Le circuit oscillant de mesure D comprend l'élément vibrant 30 de mesure décrit précédemment et le circuit d'entretien 32 de type connu. Ce circuit comprend l'amplificateur 130 avec, en contre-réaction, l'élément oscillant 30. Des capacités 132 et 134 sont montées respectivement entre l'entrée et la sortie de l'amplificateur d'une part et la masse d'autre part. Ce circuit est complété par un amplificateur d'isolation 136.

Un circuit oscillant de référence E a une structure sensiblement identique et comprend l'amplificateur 138 avec, en contre-réaction, l'élément oscillant de référence 34. Ce circuit comprend, en outre, les capacités 142 et 144. Il faut observer que la capacité 144 est réglable pour pouvoir adapter la fréquence de référence comme cela sera expliqué ultérieurement.

Des moyens de traitement G comprennent essentiellement deux compteurs par M (M: nombre entier) référencés respectivement 146 et 148, un troisième compteur 150 et un générateur 152 d'impulsions électriques à fréquence réglable. Plus précisément, les entrées d'horloge 146a et 148a des compteurs 146 et 148 reçoivent les impulsions délivrées par les circuits oscillants D et E. Les sorties 146b et 148b des compteurs 146 et 148 sont reliées aux deux entrées d'une porte OU EXCLUSIF 154. La source de fréquence variable 152 est constituée, de préférence, par un générateur 152a qui délivre un signal impulsionnel à fréquence élevée fixe et dont la sortie est reliée à un diviseur programmable 152b. A la sortie du diviseur 152b, le signal a donc la fréquence $f_c$ réglée par le taux de division du diviseur 152b. Bien entendu, le générateur 152 pourrait aussi être constitué par un générateur à fréquence commandable.

La sortie du générateur 152 et la sortie de la porte 154 sont reliées respectivement aux deux entrées d'une porte ET 156. L'entrée d'horloge 150a du troisième compteur 150 est reliée à la sortie de la porte ET 156. Les sorties des compteurs 146 et 148 sont reliées respectivement à l'entrée D et à l'entrée d'horloge 158a d'un bistable de type D 158 dont la fonction est de donner le signe de la pression mesurée par l'élément oscillant, c'est-à-dire l'ordre dans lequel se présente le front de montée des signaux délivrés respectivement par les compteurs 146 et 148.

Le circuit d'affichage et de remise à zéro H comprend une mémoire commandable 160 dont les entrées sont reliées aux sorties binaires $150_1$ et $150_n$ du compteur 150. La mémoire 160 est connectée elle-même à un ensemble de décodage et d'affichage 162. L'ensemble 162 d'affichage comprend une entrée particulière 162a reliée à la sortie du bistable 158 pour afficher le signe de la pression par rapport à la pression de référence donnée par le circuit E. Bien entendu, si la pression de référence est nulle, ces circuits n'existent pas.

Les sorties 146b et 148b des compteurs 146 et 148 sont également respectivement reliées aux deux entrées d'une porte ET 164. La sortie de la porte 164 est reliée à l'entrée d'un monostable 166 qui est du type "non réexcitable". La sortie du monostable 166 délivre un signal de commande LD qui est appliqué d'une part à l'entrée d'un deuxième monostable 168 et d'autre part à l'entrée de commande 160a de la mémoire 160. Le monostable 168 délivre une impulsion de remise à zéro qui est appliquée aux entrées de remise à zéro 146c, 148c et 150c respectivement des compteurs 146, 148 et 150.

Le fonctionnement du détecteur de pression qui vient d'être décrit est le suivant:

Le compteur 146 compte les impulsions délivrées par l'oscillateur de mesure D. Lorsque le compteur a compté M impulsions, sa sortie passe à l'état logique 1.

Simultanément, le compteur 148 compte les impulsions délivrées par l'oscillateur de référence E. Lorsque le compteur a compté M impulsions, sa sortie passe au niveau logique 1. Soit $T_t$ le temps que met le compteur 146 à compter M impulsions et $T_r$ le temps que met le compteur 148 à compter M impulsions. Le signal L qui apparaît à la sortie de la porte OU EXCLUSIF 154 a un niveau logique 1 entre les instants $t_1$ et $t_2$ où les sorties des compteurs 146 et 148 passent à l'état logique 1. Le signal L a donc le niveau logique 1 pendant une durée $T_t - T_r$. Dans un premier cas, le temps $T_t$ est inférieur au temps $T_r$, c'est-à-dire que la pression à mesurer est inférieure à la pression de référence. Au contraire, dans un deuxième cas, le temps $T_t$ est supérieur au temps $T_r$, donc la pression à mesurer est supérieure à la pression de référence po. Le premier cas ne peut pas se rencontrer avec l'appareil de la figure 4 puisque le boîtier du résonateur de référence est sous vide. En revanche ce cas pourrait se produire si le boîtier du résonateur de référence était à la pression atmosphérique pour faire une mesure relative.

Le compteur 150 reçoit sur son entrée 150a les impulsions du signal P délivré par la porte ET 156. Il reçoit donc les impulsions délivrées par le générateur 152 entre les instants $t_1$ et $t_2$. En conséquence, à partir de l'instant $t_2$, le contenu du compteur 150 est égale au nombre d'impulsions N émises par le générateur 152 pendant le temps $T_t - T_r$. Ce nombre N est représentatif de la pression p à mesurer comme cela sera expliqué ultérieurement. De plus, à l'instant $t_2$, la porte ET 164 voit sa sortie passer au niveau logique 1. Ceci provoque le changement d'état du monostable 166 qui voit sa sortie passer à 1 pendant le temps $\tau_1$ fixé par sa constante de temps, et délivre ainsi le signal LD. Le signal LD délivré par le monostable 166 commande le déblocage de la mémoire 160 et le nombre N d'impulsions est appliqué au système de décodage et d'affichage 162. Le front descendant du signal LD provoque le changement d'état de la sortie du monostable 168 qui passe au niveau logique 1 pendant le temps $\tau_2$ fixé par sa constante de temps. Cette impulsion remet à zéro les compteurs 146, 148 et 150. Lorsqu'il apparaît le front descendant de cette impulsion, le dispositif est prêt pour une nouvelle mesure de pression.

En résumé, le compteur 150 compte les impulsions du signal délivré par le générateur d'impulsions 152 dans la fenêtre limitée par les instants $t_1$ et $t_2$. Le nombre N d'impulsions représente la pression p à mesurer, la relation entre N et p étant connue pour un élément vibrant donné. On comprend que cette mesure de différence de fréquence fait disparaître la modification de fréquence due à la température puisque cette modification est sensiblement la même pour les deux signaux.

Le réglage du capteur de pression est réalisé en agissant sur la fréquence $f_C$ du signal délivré par le générateur 152 et sur la valeur de la capacité 144 de l'oscillateur de référence.

En agissant sur la valeur de la capacité variable , on règle la valeur de référence. Pour cela on monte le capteur sur une enceinte où il règne la même pression que dans le boîtier du résonateur de référence. On agit sur la capacité 144 jusqu'à ce que N vaille zéro.

En agissant sur la valeur de la fréquence $f_c$ on peut régler la sensibilité de la mesure.

Si on appelle $f_1$ la fréquence délivrée par le résonateur de mesure et $f_2$ la fréquence délivrée par le résonateur de référence, on a la relation:

$$T_r - T_t = M \times \frac{f_1 - f_2}{f_1 \times f_2}$$

Compte tenu du choix des caractéristiques thermiques des deux résonateurs on a:

$f_1 - f_2 = f_2.b.p$; formule dans laquelle b est le coefficient barométrique qui vaut $250.10^{-6}$/bar dans l'exemple considéré, et p la pression exprimée en bars. D'où la relation

$$T_r - T_t = \frac{M.b.p}{f_1}$$

En outre on a

$$N = (T_r - T_t)\, f_c$$

d'où
$$N = \frac{M.b.p}{f_1}\, f_c$$

La fréquence $f_1$ est très peu différente de 32.768 Hz. La valeur de b est déterminée. p représente la plage totale de mesure et N la sensibilité. Si l'on ajoute que le temps de mesure $T_r$ vaut $M/f_2$, on peut déterminer aisément les valeurs de M et de $f_c$.

Il découle de la description de ce capteur de pression qu'il présente de nombreux avantages par rapport à ceux de l'état de la technique. Tout d'abord il fait appel à deux diapasons excités en flexion à 32 kHz. Cela correspond aux diapasons couramment fabriqués pour les montres. Leur coût est donc réduit. Cela est particulièrement intéressant dans le cas fréquent où le gaz dont on veut mesurer la pression est "polluant" ou contient des particules en suspension. En effet, dans ce cas, des particules ou des molécules peuvent se fixer sur le diapason et modifier ainsi sa masse, et donc sa fréquence de résonance. Il est alors nécessaire de le changer. Ensuite, grâce à la compensation thermique, il est possible de faire une mesure relativement précise dans une plage importante de température. Enfin, le circuit électronique est simple et consomme peu d'énergie électrique.

Bien entendu, on pourrait utiliser d'autres modes de réalisation du circuit électronique. Par exemple, il pourrait comprendre un générateur de battement entre les fréquences délivrées par les deux résonateurs et un circuit de mesure de la fréquence de battement.

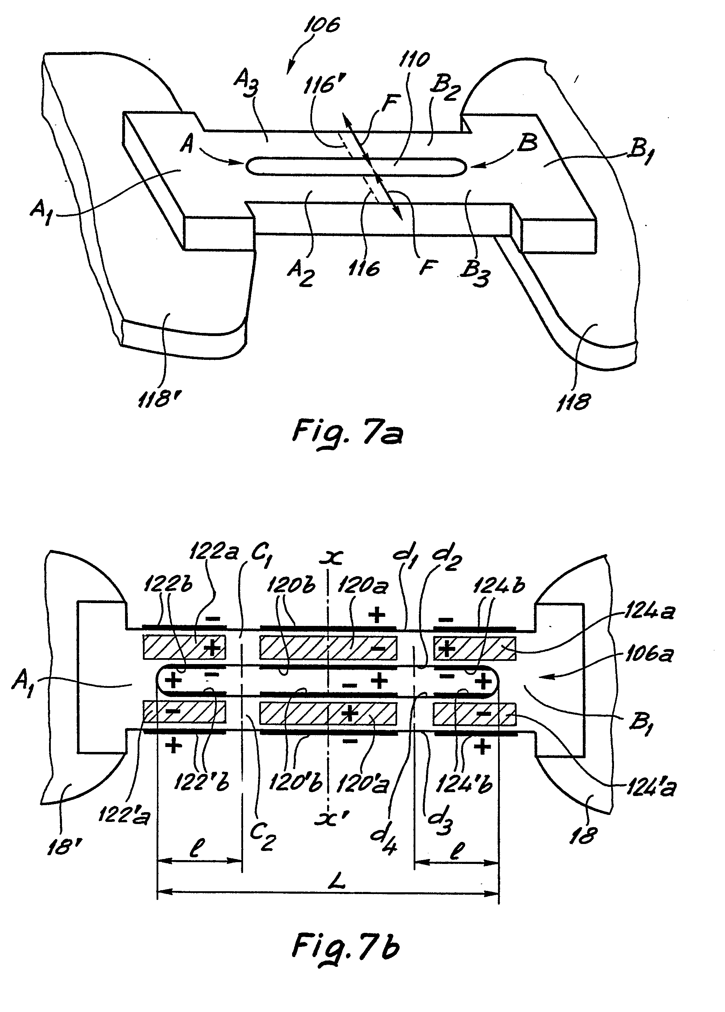

Si l'on veut augmenter encore la sensibilité du capteur de pression, on peut utiliser pour l'élément sensible à la pression un diapason légèrement modifié, comme celui de la figure 6.

On retrouve bien entendu une base 10 et deux bras référencés respectivement 12 et 14. Selon l'invention les extrémités de chaque bras sont percées de fentes longitudinales parallèles à la longueur du bras. Dans l'exemple particulier considéré on trouve quatre fentes 16 à l'extrémité de chaque bras. Ces fentes ont une longueur l et une largeur e. On voit qu'en conséquence les faces latérales 16a des fentes 16 sont disposées parallèlement aux surfaces S latérales des bras du diapason qui interviennent dans l'effet de pression. En outre la largeur e des fentes est suffisante pour que sa valeur soit nettement supérieure au libre parcours moyen des molécules du gaz. Ce diapason étant excité en flexion, les faces latérales 16a des fentes 16 sont disposées orthogonalement au déplacement des bras.

Enfin il est important d'observer que la présence des fentes ne gêne pas la réalisation des métallisations formant les électrodes. En effet il est bien connu que l'extrémité des bras des diapasons est laissée libre d'électrode afin d'éviter l'excitation de modes partiels de flexion.

Ce diapason, qui a des dimensions horlogères, présente une longueur L de bras de l'ordre de 2,7 mm une largeur w de 215 microns et une épaisseur t de 125 microns. Chaque fente 16 a une longueur l de 1 mm et une largeur e de 30 microns. On obtient, dans une plage allant de quelques millibars à environ 1 bar, une relation très linéaire entre la variation relative de fréquence du diapason et la pression avec un coefficient de dépendance vis-à-vis de la pression qui vaut environ 631 ppm/bar. Il faut comparer cette valeur au même coefficient pour un diapason en quartz classique de caractéristiques similaires mais dépourvu de fente qui vaut alors 250 ppm/bar.

De plus les diapasons ainsi réalisés ont une fréquence propre d'environ 77 kHz. Si l'on augmente la longueur des bras du diapason pour ramener sa fréquence propre à environ 32 kHz la formule donnée précédemment montre que le coefficient de dépendance vis à vis de la pression est multiplié par au moins deux. On voit donc qu'avec un diapason selon l'invention on peut obtenir, dans la gamme qui va de quelques millibars à au moins un bar, un senseur de pression dans lequel la variation relative de fréquence en fonction de la pression présente un coefficient qui vaut environ 1200 ppm/bar. On comprend aisément que cela permet de faire une mesure encore plus précise de la pression.

Les figures 7a et 7b montrent un autre mode de réalisation du capteur selon l'invention pour mesurer des forces. Elles représentent plus précisément un élément sensible en forme de double diapason pour un tel capteur.

Le résonateur 106 est l'équivalent de deux diapasons A et B dont les extrémités libres des branches seraient réunies deux à deux. On voit aisément qu'une fente centrale 110, et des pointillés 116, 116' définissent effectivement le contour de deux diapasons. Par exemple, pour le diapason A, on trouve une base $A_1$ et les bras $A_2$ et $A_3$. De même pour le diapason B on trouve une base $B_1$ et des bras $B_2$ et $B_3$. Les extrémités libres des bras $A_2$ et $B_3$ sont réunies ainsi que les extrémités libres des bras $A_3$ et $B_2$. On a symbolisé par les références 118 et 118' des éléments support sur lesquels sont collées les bases $A_1$ et $B_1$ du résonateur. La force à mesurer est appliquée entre les éléments 118 et 118'. Ainsi les contraintes sont transmises intégralement au résonateur. Le résonateur constitué par le double diapason est excité pour vibrer en mode principal de flexion comme cela est symbolisé par les flèches F.

A titre d'exemple le résonateur de la figure 7a a une épaisseur de 125 microns, la largeur de chaque bras est de l'ordre de 108 microns et la longueur totale L des bras du double diapason, c'est-à-dire la longueur de la fente centrale 110, est de 4,08 mm.

La figure 7b montre un mode possible de réalisation des électrodes pour exciter le double diapason en flexion. Pour simplifier la description de ces électrodes on appellera $C_1$ le barreau formant les bras $B_2$ et $A_3$ des diapasons et $C_2$ le barreau constitué par les bras $A_2$ et $B_3$ des diapasons. En outre on appellera x x' la ligne qui passe par les traits en pointillés 116 et 116' et qui définit ainsi la séparation entre les deux diapasons. Enfin on appellera 106a la face supérieure du résonateur, la face inférieure de ce même résonateur n'étant pas visible sur la figure 7b, et on appellera flancs les côtés des barreaux $C_1$ et $C_2$ qui sont perpendiculaires au plan de la figure 7b et donc à la face supérieure 106a du résonateur. En outre on appellera d1 le flanc externe du barreau $C_1$ tandis que son flanc interne sera référencé $d_2$. De même, pour le barreau $C_2$ le flanc externe est référencé $d_3$ et son flanc interne $d_4$. Chaque barreau porte sur sa face supérieure une électrode centrale symétrique par rapport à la ligne x x' et des électrodes d'extrémité qui sont disposées à cheval sur une extrémité du barreau et sur la base $A_1$ ou $B_1$ des diapasons. On appellera 120a l'électrode centrale du barreau $C_1$ disposée sur la face supérieure de ce barreau et 120'a l'électrode correspondante pour le barreau $C_2$.

On appellera 122a et 124a les électrodes disposées aux extrémités de la face supérieure du barreau $C_1$, et 122'a et 124'a les électrodes disposées aux extrémités du barreau $C_2$. Il faut compren-dre que sur la face inférieure des barreaux $C_1$ et $C_2$ on trouve des électrodes identiques à celles qui sont disposées sur la face supérieure et faisant face à celles-ci. Chaque barreau comporte également des électrodes disposées sur ses flancs. On trouve une électrode sur chaque flanc au droit de chaque paire d'électrodes disposées sur les faces supérieures et inférieures. Sur les flancs $d_1$ et $d_2$ on trouve des électrodes latérales centrales 120b et des électrodes d'extrémité 122b et 124b. Pour simplifier la figure ces électrodes latérales sont représentées simplement par un trait plus fort. En ce qui concerne le barreau $C_2$ on trouve également sur ses flancs $d_3$ et $d_4$ des électrodes centrales 120'b et des électrodes d'extrémité 122'b et 124'b. Ainsi on trouve dans la région centrale de chaque barreau deux paires d'électrodes se faisant respectivement face et à chaque extrémité du barreau également deux paires d'électrodes se faisant respectivement face. A titre d'exemple la longueur de barreau l intéressée par une électrode d'extrémité est légèrement inférieure au quart de la longueur L totale d'un barreau. Plus précisément le rapport entre ces deux longueurs vaut de préférence 0,23.

Pour exciter le résonateur il faut appliquer une différence de potentiel entre les électrodes. Sur la figure 7b on a représenté par le signe + les électrodes reliées à une première borne de la source de tension et par le signe − les électrodes reliées à la deuxième borne de la source de tension. Les électrodes appartenant à une même paire se faisant face sont portées au même potentiel. En particulier le potentiel des électrodes non représentées sur la face inférieure des barreaux est identique à celui des électrodes représentées sur la face supérieure et leur faisant face. En outre si deux électrodes d'une même paire sont portées à un premier potentiel les deux électrodes de la deuxième paire disposées au même niveau du barreau sont portées au potentiel opposé. Enfin si les électrodes supérieure et inférieure centrales sont portées à un premier potentiel les électrodes d'extrémité supérieure et inférieure sont portées au potentiel opposé.

On n'a pas représenté sur la figure 7b les interconnexions qui permettent de porter effectivement les différentes électrodes au potentiel requis. Il faut observer que, compte-tenu du nombre élevé d'électrodes, il est difficile de réunir entres elles les différentes électrodes à un même potentiel à l'aide de métalisations directement déposées sur le matériau piézo-électrique. C'est pourquoi il peut être intéressant de n'exciter que certaines des électrodes représentées sur la figure 7b. Par exemple on peut exciter seulement les électrodes centrales ou seulement les électrodes d'extrémité. Il faut observer que dans ce cas la capacité dynamique du résonateur complet est divisée par deux. On peut encore exciter les électrodes centrales et une partie des électrodes d'extrémité.

Un tel résonateur a une fréquence de résonance de 32.768 Hz. Il présente une sensibilité de 10%/N, c'est-à-dire que pour une force appliquée de 1 N, la variation de fréquence représente 10% de la fréquence du résonateur lorsqu'aucune force n'est appliquée. Enfin, la force maximale applicable, c'est-à-dire celle qui provoque la rupture, est égale à 2,7 N.

Le capteur complet de mesure de force a la même structure générale que celle qui est représentée sur la figure 1. Le résonateur 30 est constitué par le double diapason représenté sur les figures 7a et 7b. Le résonateur 34 de référence est de type quelconque. La seule condition est qu'il présente les mêmes caractéristiques thermiques que le double diapason. En outre, le montage des deux résonateurs est tel qu'ils soient à la même température. On obtient alors la compensation thermique déjà décrite. Le circuit G peut avoir exactement la même structure que celle qui est représentée sur la figure 5. Il suffit d'adapter les valeurs de M et de $f_c$

à la sensibilité souhaitée et aux caractéristiques du double diapason.

Il faut cependant observer que, dans le cas d'une mesure de force, les éléments support 118, 118' se déplacent très légèrement sous l'effet de la force appliquée. Il est donc pratiquement exclu d'enfermer le double diapason dans un boîtier étanche où un vide poussé serait réalisé. En conséquence, le double diapason est soumis à un double effet parasite d'une part la température d'autre part la pression qui règne dans le milieu où il se trouve. Cet effet de pression risque bien sûr de perturber la mesure de force.

Pour remédier à cet inconvénient on utilise le résonateur de compensation thermique pour effectuer en plus la compensation en pression. Pour assurer cette deuxième compensation, on utilise comme résonateur de compensation un résonateur qui a le même comportement vis-à-vis de la pression, et on place celui-ci dans le même milieu ambient que le double diapason de mesure. Pour réunir toutes ces conditions, la solution la plus simple consiste, bien sûr, à utiliser comme résonateur de compensation 34 également un double diapason ayant exactement la même forme que le double diapason de mesure. Ainsi on a identité de comportement thermique et de comportement à la pression. En outre, les deux résonateurs étant plongés dans le même milieu ambient, ils sont à la même température.

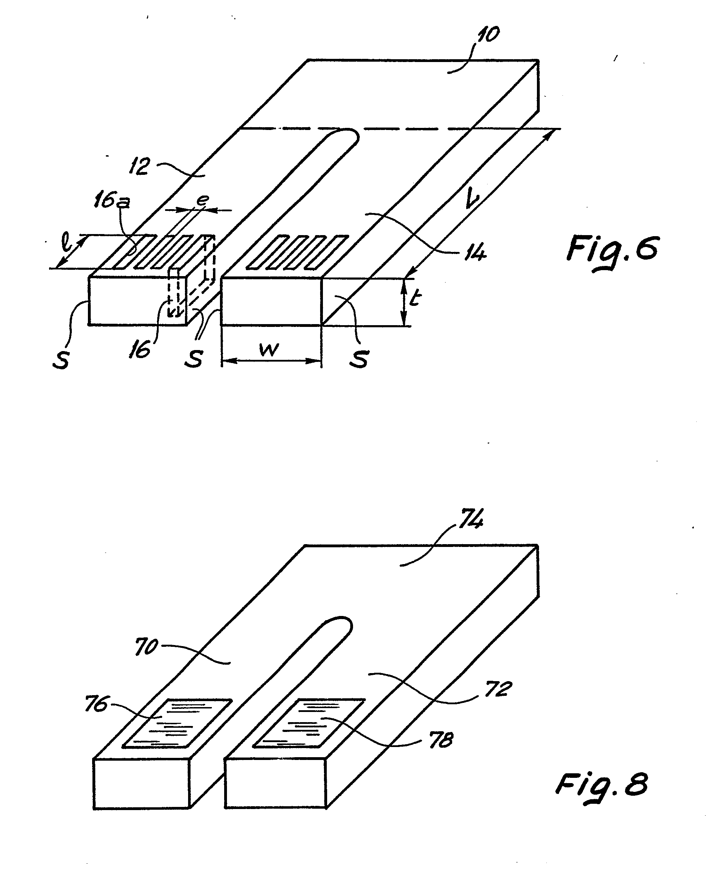

La figure 8 illustre un élément sensible pour mesurer, par exemple, la teneur en un gaz particulier dans un mélange gazeux ou le taux d'humidité dans l'air.

L'élément sensible a la forme d'un diapason classique avec des bras 70, 72 et une base 74. Il comporte des électrodes pour être excité en flexion. Il comporte en outre sur au moins une partie de sa surface un revêtement fait en un matériau qui absorbe sélectivement et de façon réversible le gaz dont on veut mesurer la teneur. Ainsi le diapason voit sa masse augmenter d'une façon proportionnelle à la teneur en gaz considéré. Cette variation de masse entraîne une variation de la fréquence de résonance du diapason. Par exemple le diapason comporte deux zones de revêtement absorbantes sélectives 76 et 78 disposées à l'extrémité des bras 70 et 72 du diapason au delà des électrodes. Du fait qu'ainsi l'augmentation de masse se produit à l'extrémité des bras, les variations de fréquence sont amplifiées. L'élément sensible représenté sur la figure 8 constitue le résonateur 30 de la figure 1. Pour le résonateur de compensation 34 il suffit qu'il ait les mêmes caractéristiques thermiques que le résonateur 34.

Il faut observer que, comme dans le cas du capteur de force, il est exclu de placer le diapason de mesure dans le vide, puisque celui-ci est plongé dans le mélange gazeux à analyser. Il se pose donc le même problème de compensation de la pression. Ce problème est résolu aisément en utilisant deux diapasons identiques, seul le diapason de mesure étant muni des dépôts absorbants. Les deux diapasons sont plongés dans le même milieu ambient ce qui assure l'égalité des températures. Le circuit électronique peut être identique à celui de la figure 5.

Bien entendu, l'invention pourrait s'appliquer à d'autres capteurs de mesure à condition que l'élément sensible soit constitué par un résonateur piézo-électrique et que la grandeur mesurée ne soit pas la température.

REVENDICATIONS

1. Capteur pour la mesure d'une grandeur physique, différente de la température, caractérisé en ce qu'il comprend:
- un premier résonateur piézo-électrique (30) monté pour être soumis à ladite grandeur physique (GP) et présentant des caractéristiques thermiques; des moyens (32) pour faire vibrer ledit premier résonateur (30) et pour recueillir un premier signal ($f_1$) dont la fréquence dépend de ladite grandeur physique et de la température;
- un deuxième résonateur piézo-électrique (34) présentant sensiblement les mêmes caractéristiques thermiques que ledit premier résonateur (30) et monté pour ne pas être soumis à ladite grandeur physique (GP); des moyens (36) pour faire vibrer ledit deuxième résonateur (34) et pour recueillir un deuxième signal ($f_2$) dont la fréquence dépend de la température;
- des moyens pour que les deux résonateurs (30, 34) soient soumis à la même température, et
- des moyens (G) pour élaborer, en réponse auxdits premier et deuxième signaux ($f_1$, $f_2$), un signal de mesure (f') représentatif de la valeur de ladite grandeur physique et sensiblement indépendant de ladite température.

2. Capteur selon la revendication 1, caractérisé en ce que ledit signal de mesure (f') est une fonction de la différence des fréquences des premier et deuxième signaux ($f_1$, $f_2$).

3. Capteur selon l'une quelconque des revendications 1 et 2, pour mesurer la pression d'un gaz, caractérisé en ce que ledit premier résonateur (30) comprend un diapason (48) excité en flexion.

4. Capteur selon la revendication 3, caractérisé en ce que ledit premier résonateur (30) comprend en outre un boîtier (52) dans lequel il est placé, muni d'un orifice (53) pour y laisser pénétrer le gaz et en ce que ledit deuxième résonateur (34) comprend un diapason (50) excité en flexion et un boîtier étanche (54) contenant ledit diapason (50) et dans lequel est réalisé le vide.

5. Capteur selon la revendication 4, pour mesurer la pression d'un gaz dans une enceinte, caractérisé en ce que les moyens pour soumettre les deux résonateurs (30, 34) à une même température comprennent une bride (40) susceptible d'être fixée sur ladite enceinte, ladite bride comprenant un premier logement (42) pour fixer le premier boîtier (52) muni d'une ouverture (46) pour faire communiquer ledit orifice (53) du premier boîtier (52) avec ladite enceinte, et un deuxième logement (44) pour fixer ledit deuxième boîtier (54).

6. Capteur selon l'une quelconque des revendications 3 à 5, caractérisé en ce que ledit diapason (10, 12, 14) formant le premier résonateur 30 est muni de fentes (16) disposées à l'extrémité de chaque bras parallèlement à la longueur desdits bras, et traversant toute l'épaisseur desdits bras.

7. Capteur selon l'une quelconque des revendications 3 à 6, caractérisé en ce que ledit premier diapason (48) a une fréquence de résonance, à sa température d'inversion, sensiblement égale à 32.768 Hz.

8. Capteur selon l'une quelconque des revendications 1 et 2 pour la mesure d'une force, caractérisé en ce que ledit premier

0101669

résonateur (30) comprend un élément vibrant (106) taillé dans une plaquette en matériau piézo-électrique constitué par deux barreaux sensiblement parallèles réunis à leurs extrémités par deux portions formant des bases et des moyens pour appliquer ladite force entre lesdites bases parallèlement à la longueur desdits barreaux, et en ce que. les moyens pour exciter ledit premier résonateur comprennent des électrodes disposées sur lesdits barreaux pour les faire vibrer en flexion.

9. Capteur selon la revendication 8, caractérisé en ce que ledit deuxième résonateur (34) est un élément vibrant ayant la même forme que celui du premier résonateur (30), et en ce que les deux éléments vibrants sont placés dans le même milieu.

10. Capteur selon l'une quelconques des revendications 1 et 2 pour mesurer la teneur d'un gaz dans un mélange gazeux, caractérisé en ce que ledit premier résonateur (30) est muni sur une partie de sa surface d'un revêtement pour absorber de façon sélective et reversible ledit gaz.

11. Capteur selon la revendication 10, caractérisé en ce que ledit premier résonateur (30) est un diapason (70, 72, 74) excité en flexion et en ce que ledit revêtement (76, 78) est disposé à l'extrémité de chaque bras (72, 70) du diapason.

12. Capteur selon la revendication 11, caractérisé en ce que ledit deuxième résonateur (34) est sensiblement identique au premier résonateur (30) mais dépourvu de revêtement absorbant, et en ce que les deux diapasons sont placés dans ledit mélange gazeux.

0101669

1/5

Fig.1

Fig.2a

Fig.2b

**Fig.3a**

**Fig.3b**

**Fig.4**

Fig.5

Fig. 7a

Fig. 7b

Fig.6

Fig.8